# EUROPÄISCHE PATENTSCHRIFT

(11) **EP 2 176 575 B1**
(45) Veröffentlichungstag und Bekanntmachung des Hinweises auf die Patenterteilung: **13.08.2014**
(21) Anmeldenummer: 08761139.8
(22) Anmeldetag: 18.06.2008
(51) Int. Cl.: F16K 31/00

(54) **VERFAHREN ZUR ANSTEUERUNG EINES ELEKTROMAGNETISCHEN SCHALTVENTILS**
METHOD FOR ACTUATING AN ELECTROMAGNETIC SWITCHING VALVE
PROCÉDÉ DE COMMANDE D'UNE ÉLECTROVANNE

(30) Priorität: 10.07.2007 US 948776 P
(43) Veröffentlichungstag der Anmeldung: 21.04.2010
(73) Patentinhaber: Schaeffler Technologies GmbH & Co. KG, 91074 Herzogenaurach (DE)
(72) Erfinder: PADRONI, Gianni, 91074 Herzogenaurach (DE)
(86) Internationale Anmeldenummer: PCT/EP2008/057668
(87) Internationale Veröffentlichungsnummer: WO 2009/007207

(56) Entgegenhaltungen:
- EP-A- 0 843 779
- WO-A-2004/113687
- DE-A1- 19 921 456
- DE-A1-102006 055 171

## Beschreibung

### Gebiet der Erfindung

Die Erfindung betrifft ein Verfahren zur Ansteuerung eines elektromagnetischen Schaltventils, das Teil eines unterschiedliche Betriebszustände aufweisenden Fluidsystems ist und das eine Magnetspule sowie eine zwischen einer eine Fluidströmung freigebenden ersten Schaltstellung und einer die Fluidströmung sperrenden zweiten Schaltstellung verlagerbare Ankergruppe mit einem Ventilschließkörper und einem Magnetanker aufweist, der in zugkraftfreier Kraftschlussverbindung mit dem Ventilschließkörper steht.

### Hintergrund der Erfindung

Elektromagnetische Schaltventile mit einer Ankergruppe, bei welcher der Magnetanker in zugkraftfreier Kraftschlussverbindung mit dem Ventilschließkörper steht, sind in großer Vielfalt sowohl hinsichtlich ihrer Anwendung als auch hinsichtlich ihrer konstruktiven Ausgestaltung in der Fluidtechnik bekannt. Ein solches Schaltventil geht beispielsweise aus der DE 10 2005 061 509 A1 hervor. Dort umfasst die Ankergruppe einen Magnetanker, einen daran befestigen Ankerstößel und einen Ventilschließkörper, der mit dem Ankerstößel nicht fest verbunden ist, sondern an diesem lediglich stirnseitig anliegt. Bei Verlagerung des Ventilschließkörpers in die erste, die Fluidströmung freigebende Schaltstellung schlägt der Ventilschließkörper an die Stirnfläche einer ventilgehäusefesten Lagerbuchse für den Ankerstößel an, während sich infolge Massenträgheitskräften der Ankerstößel vom Ventilschließkörper trennt und gemeinsam mit dem Magnetanker weiter verlagert. Die Dauer und der Verlauf dieses nachfolgend auch als Freiflugphase bezeichneten Überschwingens sind abhängig von Reibungskräften und der Kraft einer Ankerfeder, die den Ankerstößel zur Anlage am Ventilschließkörper zurückführt.

Die Freiflugphase kann jedoch einen funktionsgerechten Betrieb des Schaltventils mit hochfrequenten, d.h. nur durch extrem kurze Pausen beabstandeten Umschaltvorgängen erheblich beeinträchtigen, wenn die Dauer der Freiflugphase deutlich länger als die dann betriebsbedingt größtmöglich zulässige Pause zwischen den aufeinander folgenden Spulenbestromungen wäre.

### Aufgabe der Erfindung

Der vorliegenden Erfindung liegt daher die Aufgabe zugrunde, ein Verfahren zur Ansteuerung eines Schaltventils der eingangs genannten Art zu schaffen, durch das ein die Fluidströmung präzise steuernder Betrieb eines solchen Schaltventils auch mit sehr schnell aufeinanderfolgenden Schaltvorgängen ermöglicht wird.

### Zusammenfassung der Erfindung

Erfindungsgemäß wird diese Aufgabe durch die kennzeichnenden Merkmale des Anspruchs 1 gelöst, während vorteilhafte Weiterbildungen und Ausgestaltungen der Erfindung den Unteransprüchen entnehmbar sind. Demnach soll in zumindest einem Betriebszustand des Fluidsystems zwischen zwei die Ankergruppe verlagernden Spulenbestromungen eine Zwischenbestromung zur Dämpfung eines Überschwingens des Magnetankers vorgenommen werden. Wie bei der Spulenbestromung zur Verlagerung der Ankergruppe wird auch bei der Zwischenbestromung eine auf den Magnetanker wirkende, jedoch vergleichsweise kleine und/oder nur kurzzeitig wirkende Kraft erzeugt, die den Massenträgheitskräften und folglich dem anfänglichen Überschwingen des Magnetankers und gegebenenfalls damit verbundener Übertragungsbauteile entgegen gerichtet ist und im Falle einer Ankerfeder deren Kraftwirkung verstärkt. Demzufolge kann das Überschwingen sowohl hinsichtlich des Hubes als auch der Dauer so gedämpft werden, dass die Freiflugphase des Magnetankers zumindest auf die Dauer einer größtmöglich zulässigen Pause zwischen zwei sehr schnell aufeinander folgenden Spulenbestromungen / Schaltvorgängen reduziert werden kann.

Ein weiterer Vorteil des durch die Zwischenbestromung schwingungsgedämpften Magnetankers betrifft die Herstellkosten des Schaltventils. Da die am Wiederaufsetzen des überschwingenden Magnetankers beteiligten Kontaktflächen der Ankergruppe im Falle der dämpfenden Zwischenbestromung nur noch einer vergleichsweise geringen Schlagbeanspruchung ausgesetzt sind, kann der kostenintensive Aufwand zur Herstellung hochverschleißresistenter Oberflächen entsprechend reduziert werden.

In Weiterbildung der Erfindung ist es vorgesehen, dass das Überschwingen des Magnetankers während eines ersten Zeitintervalls erfolgt und die Zwischenbestromung während eines zweiten Zeitintervalls vorgenommen wird, wobei das erste Zeitintervall vollständig innerhalb des zweiten Zeitintervalls liegt. Mit anderen Worten soll einerseits das Einschalten der Zwischenbestromung zu einem Zeitpunkt vor dem Beginn des Überschwingens des Magnetankers erfolgen, wenn sich die Ankergruppe noch in einheitlichem Bewegungszustand befindet. Andererseits soll das Ende der Zwischenbestromung und folglich der Beginn der nachfolgenden Spulenbestromung zur erneuten Verlagerung der Ankergruppe nicht vor dem Zeitpunkt liegen, zu welchem die kraftschlüssige Wirkverbindung zwischen dem Magnetanker und dem Ventilschließkörper wiederhergestellt ist. Insbesondere hierdurch kann die Aufsetzgeschwindigkeit der beteiligten Kontaktflächen niedrig und in mechanisch zulässigen Grenzen gehalten werden.

Zusätzlich kann eine besonders niedrige Aufsetzgeschwindigkeit dann erreicht werden, wenn die Zwischenbestromung gestuft abgeregelt wird und zumindest zwei voneinander verschiedene mittlere Stromstärken aufweist. Einer solchen Ansteuerung liegt die Überlegung zugrunde, dass die für das Überschwingen des Magnetankers verantwortliche Massenträgheitsenergie bereits in der Phase der zunächst höheren Stromstärke abgebaut wird, so dass für die Wiederherstellung des Kraftschlusses innerhalb der Ankergruppe nur noch vergleichsweise geringe Kräfte erforderlich sind. Hierzu ist gegebenenfalls die Kraft der Ankerfeder ausreichend, während die niedrigere Stromstärke der abgeregelten Zwischenbestromung als Vorerregung der Magnetspule für die nachfolgende Spulenbestromung dient.

Das erfindungsgemäße Verfahren eignet sich in besonderem Maße zur Ansteuerung eines Schaltventils als Teil einer elektrohydraulischen Ventilsteuerung zur hubvariablen Gaswechselventilbetätigung einer Brennkraftmaschine. Während es sich bei dem Schaltventil um ein in der ersten Schaltstellung stromloses 2/2-Wegeventil handeln soll, weist eine solche Ventilsteuerung zumindest folgende Merkmale auf:
- einen zumindest eine Erhebung aufweisenden Nocken einer Nockenwelle und einen vom Nocken betätigten Geberkolben;
- einen zumindest ein Gaswechselventil hubbeaufschlagenden Nehmerkolben;
- eine zwischen dem Geberkolben und dem Nehmerkolben verlaufende Hochdruckkammer sowie eine Niederdruckkammer, wobei das Schaltventil zwischen der Hochdruckkammer und der Niederdruckkammer angeordnet ist.

In diesem Fall ermöglicht die Schwingungsdämpfung des Magnetankers infolge Zwischenbestromung eine deutliche Erweiterung des erschließbaren thermodynamischen Potenzials der an sich bekannten elektrohydraulischen Ventilsteuerung im Hinblick auf das Drehmoment-, Leistungs- und Abgasemissionsverhalten der Brennkraftmaschine. Dies basiert im wesentlichen auf der Möglichkeit, die Betätigung der Gaswechselventile auf die im Kennfeld der Brennkraftmaschine unterschiedlichsten Anforderungen an den Ladungswechsel abzustimmen. Konkret erlaubt das gedämpfte Überschwingen des Magnetankers zwei oder mehr in sehr kurzen Zeitabständen aufeinander folgende Hubverläufe des Gaswechselventils innerhalb derselben Nockenumdrehung, da der Kraftfluss zwischen dem Magnetanker und dem Ventilschließkörper zu einem deutlich früheren Zeitpunkt wiederhergestellt wird und folglich eine nachfolgende Spulenbestromung zur erneuten Verlagerung der Ankergruppe in Schließstellung des Schaltventils nahezu unmittelbar im Anschluss an die vorhergehende Spulenbestromung vorgenommen werden kann.

Außerdem soll das Verfahren in drehzahlabhängigen Betriebszuständen der Ventilsteuerung zum Einsatz kommen. Je nach Ladungswechselstrategie und Art der Gaswechselventilbetätigung kann es sich dabei sowohl um niedrige als auch um hohe Drehzahlbereiche handeln, in denen in sehr kurzen Zeitabständen aufeinander folgende Hubverläufe der Gaswechselventile innerhalb derselben Nockenumdrehung vorgesehen sind.

Diesbezüglich kann es sich in einem ersten Betriebszustand um einen Mehrfachhub handeln, der zwei oder mehr innerhalb derselben Nockenerhebung erzeugte Einzelhübe umfasst. Mit einem derartigen Mehrfachhub soll vorzugsweise ein Einlassventil beaufschlagt werden, um die Einströmbedingungen von Frischgas in den betreffenden Zylinder der Brennkraftmaschine zu verbessern.

Alternativ oder optional soll der Nocken mehrere Erhebungen aufweisen, wobei in einem zweiten Betriebszustand das Gaswechselventil innerhalb derselben Nockenumdrehung mit einem Mehrfachhub beaufschlagt wird, der innerhalb der einzelnen Erhebungen erzeugte Einzelhübe umfasst. Eine derartige Gestaltung und Betätigung der Ventilsteuerung ist insbesondere Grundlage für einen Ladungswechselprozess mit sehr hohen Abgasrückführraten. Wie es auch an einem später erläuterten Ausführungsbeispiel der Erfindung deutlich wird, kann es sich bei dem entsprechend betätigten Gaswechselventil entweder um ein Auslassventil oder um ein Einlassventil oder auch beides handeln.

### Kurze Beschreibung der Zeichnung

Weitere Merkmale der Erfindung ergeben sich aus der nachfolgenden Beschreibung und aus den Zeichnungen, in denen das erfindungsgemäße Verfahren anhand von Ausführungsbeispielen dargestellt ist. Sofern nicht anders erwähnt, sind dabei gleiche oder funktionsgleiche Merkmale mit gleichen Bezugszahlen versehen. Es zeigen:
- Figur 1: in Diagrammform den zeitlichen Bestromungs- und Hubverlauf eines elektromagnetischen Schaltventils als Teil einer elektrohydraulischen Ventilsteuerung;
- Figur 2: ein Referenzdiagramm gemäß Figur 1 ohne Zwischenbestromung;
- Figur 3: ein Referenzdiagramm gemäß Figur 1 ohne Zwischenbestromung und zeitlich ungünstiger Spulenbestromung;
- Figur 4: ein Diagramm gemäß Figur 1 mit gestuft abgeregelter Zwischenbestromung;
- Figur 5: ein Diagramm gemäß Figur 1, ergänzt um den Mehrfachhub eines Einlassventils der elektrohydraulischen Ventilsteuerung;
- Figur 6: ein Diagramm gemäß Figur 1, ergänzt um einen Einzelhub eines Einlass- oder Auslassventils der elektrohydraulischen Ventilsteuerung;
- Figur 7: eine Prinzipdarstellung der elektrohydraulischen Ventilsteuerung und
- Figur 8: ein zur Durchführung des erfindungsgemäßen Verfahrens vorgesehenes elektromagnetisches Schaltventil.

### Ausführliche Beschreibung der Zeichnungen

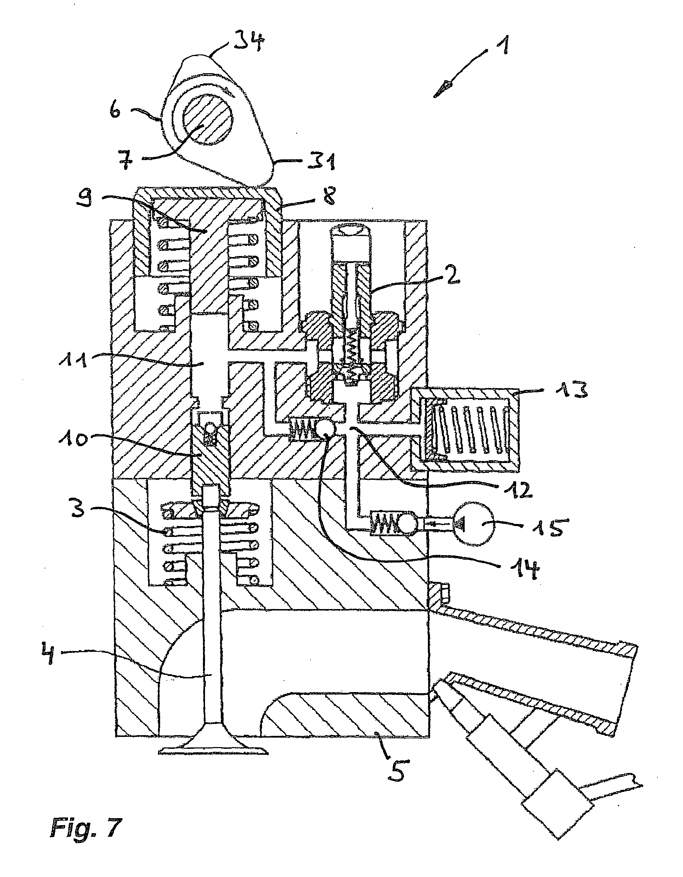

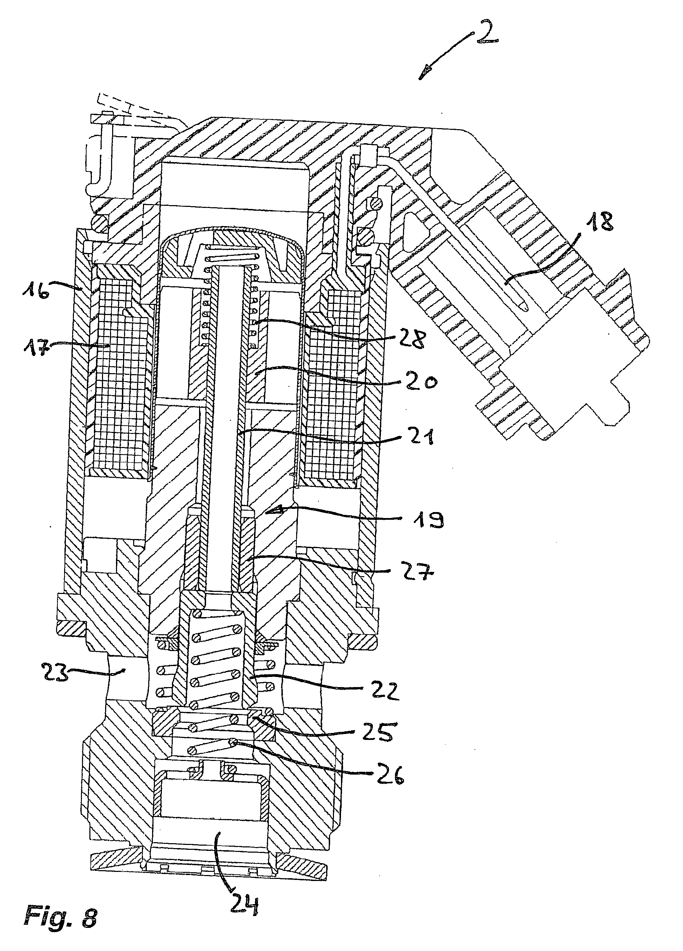

Ausgangspunkt der Beschreibung sind eine in Figur 7 dargestellte Prinzipdarstellung einer elektrohydraulischen Ventilsteuerung 1 sowie ein in Figur 8 dargestelltes elektromagnetisches Schaltventil 2 als Teil einer solchen Ventilsteuerung 1, die jeweils als solche im Stand der Technik bekannt sind und lediglich zum besseren Verständnis des erfindungsgemäßen Verfahrens zur Ansteuerung des Schaltventils 2 herangezogen werden. Die Ventilsteuerung 1 dient zur hubvariablen Betätigung eines in Schließrichtung durch eine Ventilfeder 3 kraftbeaufschlagten Gaswechselventils 4 einer Brennkraftmaschine 5 und umfasst als wesentliche Bauteile einen Nocken 6 einer Nockenwelle 7, einen vom Nocken 6 hier mittels eines Tassenstößels 8 betätigten Geberkolben 9, einen das Gaswechselventil 4 hubbeaufschlagenden Nehmerkolben 10, eine zwischen dem Geberkolben 9 und dem Nehmerkolben 10 verlaufende Hochdruckkammer 11 sowie eine Niederdruckkammer 12, wobei das Schaltventil 2 zwischen der Hochdruckkammer 11 und der Niederdruckkammer 12 angeordnet ist.

Das Schaltventil 2 ist als stromlos geöffnetes 2/2-Wege-Ventil ausgebildet und gibt in seiner stromlosen ersten Schaltstellung die Fluidströmung zwischen der Hochdruckkammer 11 und der Niederdruckkammer 12 frei, während es in seiner bestromten zweiten Schaltstellung die Fluidströmung zwischen der Hochdruckkammer 11 und der Niederdruckkammer 12 sperrt. Die Funktionsweise der an sich bekannten Ventilsteuerung 1 lässt sich dahingehend zusammenfassen, dass das in der Hochdruckkammer 11 befindliche Hydraulikmittel als hydraulisches Gestänge dient, wobei der vom Nocken 6 vorgegebene Hub bei geschlossenem Schaltventil 2 auf das Gaswechselventil 4 übertragen wird und bei geöffnetem Schaltventil 2 teilweise oder ganz in die Niederdruckkammer 12 und hier in einen federbelasteten Druckspeicher 13 abgesteuert wird. Ein Rückströmen des Hydraulikmittels aus der Niederdruckkammer 12 in die Hochdruckkammer 11 erfolgt über ein Bypass-Rückschlagventil 14. Ferner ist die Ventilsteuerung 1 zum Ausgleich von Leckagen an eine Hydraulikmittelversorgung 15 der Brennkraftmaschine 5 angeschlossen.

Der konstruktive Aufbau des Schaltventils 2 geht aus Figur 8 näher hervor. Das Schaltventil 2 weist ein Ventilgehäuse 16 mit einer Magnetspule 17 und einer mit dieser verbundenen Elektrosteckverbindung 18 auf. Eine bei bestromter Magnetspule 17 kraftbeaufschlagte Ankergruppe 19 besteht aus einem innerhalb der Magnetspule 17 längsbeweglich gelagerten Magnetanker 20, einem daran befestigten Ankerstößel 21 sowie einem Ventilschließkörper 22, auf dem der Ankerstößel 21 lediglich zur Übertragung von Druckkräften stirnseitig anliegt. Folglich stehen der Ankerstößel 21 und der Ventilschließkörper 22 in zugkraftfreier Kraftschlussverbindung miteinander.

Wie dargestellt, ist das Schaltventil 2 im unbestromten Zustand geöffnet, so dass sich in dieser Schaltstellung eine Hydraulikmittelströmung zwischen einem hochdruckkammerseitigen Anschluss 23 und einem niederdruckkammerseitigen Anschluss 24 durch einen Ringspalt zwischen dem Ventilschließkörper 22 und einem gehäusefesten Dichtsitz 25 ausbilden kann. Bei ausreichend hoher Spulenbestromung wird die Ankergruppe 19 in die zweite Schaltstellung verlagert, in welcher der Ventilschließkörper 22 am Dichtsitz 25 anliegt und die Hydraulikmittelströmung zwischen dem hochdruckkammerseitigen Anschluss 23 und dem niederdruckkammerseitigen Anschluss 24 gesperrt ist. Nach Abschalten dieser Spulenbestromung bewirkt die Kraft einer Öffnerfeder 26 die gemeinsame Rückverlagerung des Ventilschließkörpers 22, des Ankerstößels 21 und des Magnetankers 20 bis zu dem Zeitpunkt, zu welchem der Ventilschließkörper 22 an eine gehäusefeste Lagerbuchse 27 für den Ankerstößel 21 anschlägt. Gleichzeitig führt die Massenträgheit des Ankerstößels 21 und des Magnetankers 20 zu einer Trennung des Ankerstößels 21 vom Ventilschließkörper 22, so dass der Ankerstößel 21 und der Magnetanker 20 für die Dauer einer nachfolgenden Freiflugphase entgegen der Kraft einer Ankerfeder 28 überschwingen.

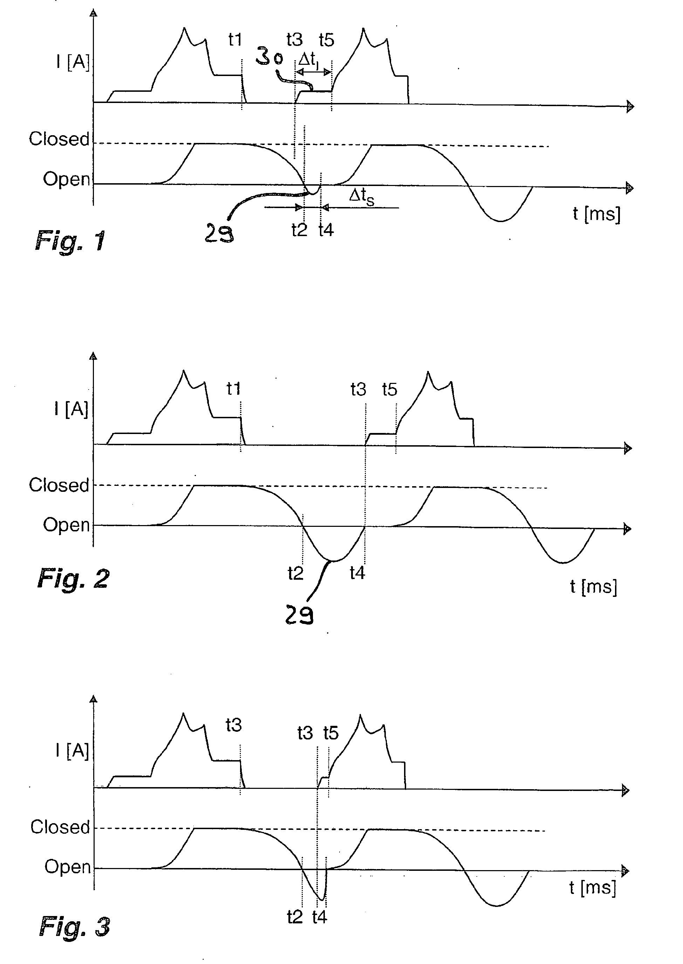

Wie es anhand der nachfolgend beschriebenen Figuren deutlich wird, kann durch eine so genannte Zwischenbestromung zwischen zwei aufeinander folgenden, die Ankergruppe 19 in Schließrichtung verlagernden Spulenbestromungen nicht nur das räumliche und zeitliche Ausmaß des Überschwingens, sondern auch der mechanische Impuls beim Wiederaufschlagen des Ankerstößels 21 auf dem Ventilschließkörper 22 wirksam gedämpft werden. In dem in Figur 1 dargestellten Diagramm sind der zeitliche Verlauf des mit I bezeichneten Spulenstroms und die Bewegung der Ankergruppe 19 zwischen der mit "Open" bezeichneten, d.h. geöffneten ersten Schaltstellung und der mit "Closed" bezeichneten, d.h. geschlossenen zweiten Schaltstellung des Schaltventils 2 aufgetragen. Ausgangspunkt der Betrachtung ist die geschlossene Schaltstellung, bei der zu einem Zeitpunkt t1 die Spulenbestromung abgeschaltet wird und sich die Ankergruppe 19 in Richtung der geöffneten Schaltstellung verlagert. Die Freiflugphase 29 des Ankerstößels 21 und des Magnetankers 20 beginnt zu einem Zeitpunkt t2, bei welcher der Ventilschließkörper 22 an der Lagerbuchse 27 anschlägt und der Ankerstößel 21 infolge Massenträgheitskräften vom Ventilschließkörper 22 abhebt. Die Freiflugphase 29 ist zu einem Zeitpunkt t4, zu dem der Ankerstößel 21 wieder auf dem Ventilschließkörper 22 aufsetzt, beendet und weist die mit Δt_{S} bezeichnete Dauer auf. Zur Reduzierung des Überschwinghubes und der Dauer Δt_{S} wird die Magnetspule 17 zu einem vor dem Zeitpunkt t2 liegenden Zeitpunkt t3 zwischenbestromt, so dass die hierdurch aufgebaute Magnetkraft den Massenträgheitskräften entgegenwirkt und diese weitgehend kompensiert. Die mit 30 bezeichnete Zwischenbestromung endet zu einem Zeitpunkt t5, zu welchem die Magnetspule 17 mit einer nachfolgenden Spulenbestromung zur erneuten Verlagerung der Ankergruppe 19 und des Ventilschließkörpers 22 in die geschlossene Schaltstellung beaufschlagt wird.

Es ist deutlich erkennbar, dass das mit Δt_{I} bezeichnete Zeitintervall der Zwischenbestromung 30 länger als das Zeitintervall Δt_{S} der Freiflugphase 29 ist, und dass das Zeitintervall Δt_{S} vollständig innerhalb des Zeitintervalls Δt_{I} liegt. Zur Vollständigkeit sei darauf hingewiesen, dass im Grenzfall auch gleich lange Zeitintervalle Δt_{I} und Δt_{S} vorgesehen sein können, wobei dann die Zeitpunkte t2 und t3 bzw. t4 und t5 zusammenfallen.

Die Charakteristik der Zwischenbestromung 30 führt einerseits zu einem den Massenträgheitskräften des Ankerstößels 21 und des Magnetankers 20 rechtzeitig entgegenwirkenden Kraftaufbau, da der Magnetkraftaufbau zu einem früheren Zeitpunkt als der Beginn der Freiflugphase 29 erfolgt. Andererseits verhindert der nach dem Zeitpunkt t4 liegende Zeitpunkt t5 in Verbindung mit der vergleichsweise kleinen mittleren Stromstärke der Zwischenbestromung 30 eine übermäßige und zudem von der Ankerfeder 28 verstärkte Gegenkraft auf den Magnetanker 20, so dass das Wiederaufsetzen des Ankerstößels 21 auf dem Ventilschließkörper 22 mit einer mechanisch akzeptablen Aufsetzgeschwindigkeit erfolgt.

Die Vorteile der erfindungsgemäßen Zwischenbestromung 30 ergeben sich durch vergleichende Betrachtung mit entsprechenden, in den Figuren 2 und 3 dargestellten Referenzdiagrammen. Figur 2 zeigt die zeitliche Verlagerung der Ankergruppe 19 ohne Zwischenbestromung. Es ist deutlich erkennbar, dass sowohl die Hubhöhe als auch die Dauer der Freiflugphase 29 zwischen den Zeitpunkten t2 und t4 deutlich größer als in Figur 1 sind. Dementsprechend kann eine erneute und definierte Verlagerung des Ventilschließkörpers 22 in die geschlossene Schaltstellung erst mit einer vergleichsweise späten nachfolgenden Spulenbestromung einschließlich der Vorerregung der Magnetspule 17 zwischen den Zeitpunkten t3 und t5 erfolgen.

Wie aus Figur 3 hervorgeht, wäre auch eine Vorverlagerung des Zeitpunkts t3 zwischen die Zeitpunkte t2 und t4 selbst bei Verkürzung der Vorerregungsdauer bis zum Zeitpunkt t5 nicht zielführend, da dann die den Massenträgheitskräften des Ankerstößels 21 und des Magnetankers 20 entgegenwirkende Magnetkraft zu einem zu späten Zeitpunkt aufgebaut werden würde und in Verbindung mit der Kraft der Ankerfeder 28 zu einer mechanisch unzulässig hohen Aufsetzgeschwindigkeit des Ankerstößels 21 auf dem Ventilschließkörper 22 zum Zeitpunkt t4 führen würde.

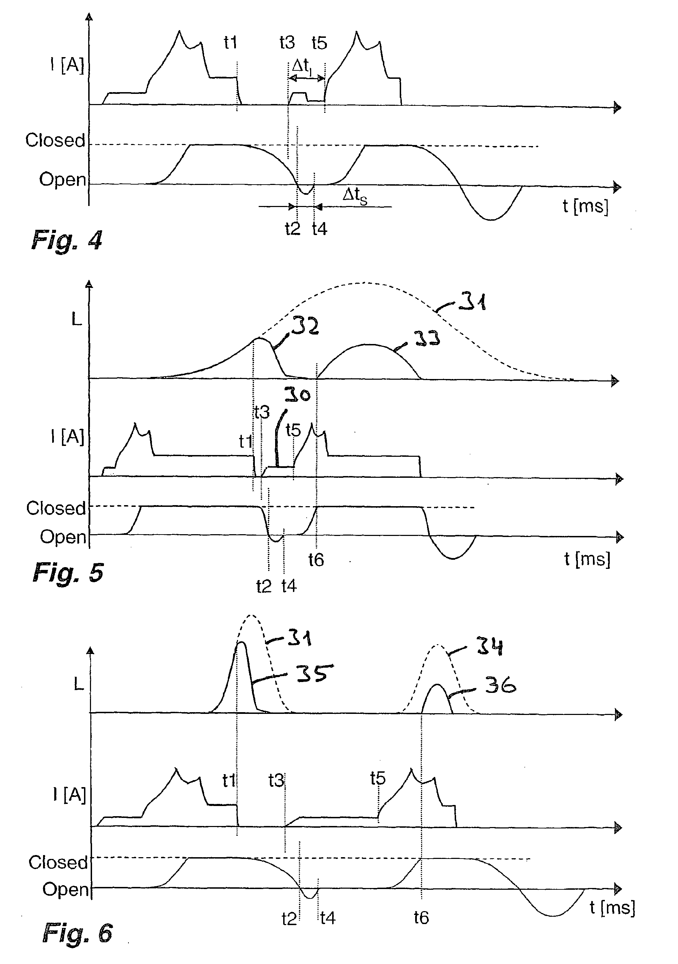

Aufbauend auf dem erfindungsgemäßen Verfahren mit Zwischenbestromung 30 gemäß Figur 1 kann diese Aufsetzgeschwindigkeit zusätzlich dadurch reduziert werden, dass die Zwischenbestromung 30 innerhalb des Zeitintervalls Δt_{I} in Stufen abgeregelt wird, so dass die zusätzlich zur Ankerfeder 28 wirkende Magnetkraft beim Wiederaufsetzen des Ankerstößels 21 zum Zeitpunkt t4 eine nur noch untergeordnete Rolle spielt. Dieser Sachverhalt ist in Figur 4 mit zwei voneinander verschiedenen mittleren Stromstärken dargestellt.

Das in Figur 5 dargestellte Diagramm enthält zusätzlich einen mit L bezeichneten Hubverlauf des Gaswechselventils 4. Zusätzlich zu dem mit durchgezogener Linie dargestellten Hubverlauf des Gaswechselventils 4 ist weiterhin die gestrichelt dargestellte Erhebung 31 des Nockens 6 erkennbar. Von Leckageverlusten aus der Hochdruckkammer 11 abgesehen wären die Erhebung 31 und der Hubverlauf des Gaswechselventils 4 identisch, wenn das Schaltventil 2 während der gesamten Dauer der Erhebung 31 geschlossen wäre. Analog zu Figur 1 wird jedoch die Spulenbestromung im Laufe der wirksamen Erhebung 31 zum Zeitpunkt t1 abgeschaltet, so dass ein bis dahin erzeugter erster Einzelhub 32 des Gaswechselventils 4 abgebrochen wird und das Gaswechselventil 4 schließt. Wie bereits erläutert, erlaubt die erfindungsgemäße Zwischenbestromung 30 die Erzeugung eines sich in sehr kurzer Zeit und hier unmittelbar anschließenden zweiten Einzelhubes 33 des Gaswechselventils 4, welcher in der erneut geschlossenen Schaltstellung des Ventilschließkörpers 22 zu einem Zeitpunkt t6 beginnt. Ein so erzeugter Mehrfachhub des Gaswechselventils 4, der sich aus den schnell aufeinander folgenden Einzelhüben 32 und 33 innerhalb derselben Erhebung 31 des Nockens 6 zusammensetzt, eignet sich hinsichtlich einer Optimierung des Ladungswechselprozesses der Brennkraftmaschine 5 in erster Linie für ein als Einlassventil ausgebildetes Gaswechselventil 4.

Ein in Figur 6 - ebenfalls innerhalb derselben Umdrehung des Nockens 6 - dargestellter Mehrfachhub des Gaswechselventils 4 eignet sich demgegenüber gleichermaßen für Einlass- und Auslassventile und führt jeweils zu einem Ladungswechsel mit hoher interner Abgasrückführrate. Die durchgezogenen Linien entsprechen wiederum dem jeweils auf das Gaswechselventil 4 übertragenen Hub, während die gestrichelten Linien den Erhebungen 31 bzw. 34 des Nockens 6 entsprechen und hier für einen ein Auslassventil betätigenden Nocken 6 dargestellt sind. Während der Einzelhub 35 dem konventionellen Auslasshub während der Expansionsphase der Brennkraftmaschine 5 entspricht, dient die Erhebung 34 zur Erzeugung eines Einzelhubes 36, der während des Ansaugtakts der Brennkraftmaschine 5 aktiviert wird. Folglich wird in diesem Betriebszustand während des Ansaugtakts nicht nur Frischgas aus der Sauganlage, sondern auch Abgas aus der Abgasanlage in den betreffenden Zylinder der Brennkraftmaschine 5 angesaugt. Die Mengendosierung des Abgases wird durch geeignete Steuerzeiteneinstellung des Einzelhubes 36 vorgenommen, der in diesem Fall zum Zeitpunkt t6 nach dem kinematisch vorgegebenen Öffnungszeitpunkt der Erhebung 34 beginnt und folglich kleiner und kürzer als die Erhebung 34 ist.

Für den Fall, dass die interne Abgasrückführung mittels Einzelhub 36 an einem Einlassventil durchgeführt werden soll, wären entweder die in Figur 7 eingezeichnete Drehrichtung der Nockenwelle 7 umzukehren oder die Erhebungen 31 und 34 anzupassen. Dementsprechend würde Abgas während der Expansionsphase der Brennkraftmaschine 5 und dann geöffnetem Einlassventil in den Ansaugkanal ausgeschoben und während der Ansaugphase erneut in den betreffenden Zylinder der Brennkraftmaschine 5 angesaugt werden.

### Liste der Bezugszeichen

- 1: elektrohydraulische Ventilsteuerung
- 2: Schaltventil
- 3: Ventilfeder
- 4: Gaswechselventil
- 5: Brennkraftmaschine
- 6: Nocken
- 7: Nockenwelle
- 8: Tassenstößel
- 9: Geberkolben
- 10: Nehmerkolben
- 11: Hochdruckkammer
- 12: Niederdruckkammer
- 13: Druckspeicher
- 14: Bypass-Rückschlagventil
- 15: Hydraulikmittelversorgung
- 16: Ventilgehäuse
- 17: Magnetspule
- 18: Elektrosteckverbindung
- 19: Ankergruppe
- 20: Magnetanker
- 21: Ankerstößel
- 22: Ventilschließkörper
- 23: hochdruckkammerseitiger Anschluss
- 24: niederdruckkammerseitiger Anschluss
- 25: Dichtsitz
- 26: Öffnerfeder
- 27: Lagerbuchse
- 28: Ankerfeder
- 29: Freiflugphase
- 30: Zwischenbestromung
- 31: Erhebung
- 32: erster Einzelhub
- 33: zweiter Einzelhub
- 34: Erhebung
- 35: Einzelhub
- 36: Einzelhub

- t: Zeitpunkt
- Δt: Zeitintervall
- I: Spulenstrom
- L: Hubverlauf des Gaswechselventils

## Patentansprüche

1. Verfahren zur Ansteuerung eines elektromagnetischen Schaltventils (2), das Teil eines unterschiedliche Betriebszustände aufweisenden Fluidsystems ist und das eine Magnetspule (17) sowie eine zwischen einer eine Fluidströmung freigebenden ersten Schaltstellung und einer die Fluidströmung sperrenden zweiten Schaltstellung verlagerbare Ankergruppe (19) mit einem Ventilschließkörper (22) und einem Magnetanker (20) aufweist, der in zugkraftfreier Kraftschlussverbindung mit dem Ventilschließkörper (22) steht, **dadurch gekennzeichnet, dass** in zumindest einem Betriebszustand des Fluidsystems zwischen zwei die Ankergruppe (19) verlagernden Spulenbestromungen eine Zwischenbestromung (30) zur Dämpfung eines Überschwingens des Magnetankers (20) vorgenommen wird.

2. Verfahren nach Anspruch 1, **dadurch gekennzeichnet, dass** das Überschwingen des Magnetankers (20) während eines ersten Zeitintervalls (Δt_{S}) erfolgt und die Zwischenbestromung (30) während eines zweiten Zeitintervalls (Δt_{I}) vorgenommen wird, wobei das erste Zeitintervall (Δt_{S}) vollständig innerhalb des zweiten Zeitintervalls (Δt_{I}) liegt.

3. Verfahren nach Anspruch 1, **dadurch gekennzeichnet, dass** die Zwischenbestromung (30) gestuft abgeregelt wird und zumindest zwei voneinander verschiedene mittlere Stromstärken aufweist.

4. Verfahren nach Anspruch 1, **dadurch gekennzeichnet, dass** es sich bei dem Schaltventil (2) um ein in der ersten Schaltstellung stromloses 2/2-Wegeventil und bei dem Fluidsystem um eine elektrohydraulische Ventilsteuerung (1) zur hubvariablen Gaswechselventilbetätigung einer Brennkraftmaschine (5) handelt, wobei die Ventilsteuerung (1) zumindest folgende Merkmale aufweist:
- einen zumindest eine Erhebung (31, 34) aufweisenden Nocken (6) einer Nockenwelle (7) und einen vom Nocken (6) betätigten Geberkolben (9);
- einen zumindest ein Gaswechselventil (4) hubbeaufschlagenden Nehmerkolben (10);
- eine zwischen dem Geberkolben (9) und dem Nehmerkolben (10) verlaufende Hochdruckkammer (11) sowie eine Niederdruckkammer (12), wobei das Schaltventil (2) zwischen der Hochdruckkammer (11) und der Niederdruckkammer (12) angeordnet ist.

5. Verfahren nach Anspruch 4, **dadurch gekennzeichnet, dass** es sich um von der Drehzahl der Brennkraftmaschine (5) abhängige Betriebszustände handelt.

6. Verfahren nach Anspruch 4, **dadurch gekennzeichnet, dass** das Gaswechselventil (4) in einem ersten Betriebszustand der Ventilsteuerung (1) mit einem innerhalb derselben Erhebung (31) erzeugte Einzelhübe (32, 33) umfassenden Mehrfachhub innerhalb derselben Umdrehung des Nockens (6) beaufschlagt wird.

7. Verfahren nach Anspruch 6, **dadurch gekennzeichnet, dass** es sich bei dem Gaswechselventil (4) um ein Einlassventil handelt.

8. Verfahren nach Anspruch 4, **dadurch gekennzeichnet, dass** der Nocken (6) mehrere Erhebungen (31, 34) aufweist, wobei das Gaswechselventil (4) in einem zweiten Betriebszustand der Ventilsteuerung (1) mit einem innerhalb der Erhebungen (31, 34) erzeugte Einzelhübe (35, 36) umfassenden Mehrfachhub innerhalb derselben Umdrehung des Nockens (6) beaufschlagt wird.

9. Verfahren nach Anspruch 8, **dadurch gekennzeichnet, dass** es sich bei dem Gaswechselventil (4) um ein Auslassventil handelt.

10. Verfahren nach Anspruch 8, **dadurch gekennzeichnet, dass** es sich bei dem Gaswechselventil (4) um ein Einlassventil handelt.

## Claims

1. Method for actuating an electromagnetic switching valve (2) which is part of a fluid system having different operating states and which has a solenoid (17) and an armature group (19) which can be moved between a first switched position, which releases a fluid flow, and a second switched position, which blocks the fluid flow, and has a valve closing body (22) and a magnet armature (20) which is connected to the valve closing body (22) in a tensile-force-free frictional connection, **characterized in that** in at least one operating state of the fluid system intermediate energization (30) for damping overshooting of the magnet armature (20) is performed between two coil energization processes which move the armature group (19).

2. Method according to Claim 1, **characterized in that** the overshooting of the magnet armature (20) takes place during a first time interval (Δtₛ) and the intermediate energization (30) is performed during a second time interval (Δtᵢ), wherein the first time interval (Δtₛ) is completely within the second time interval (Δtᵢ).

3. Method according to Claim 1, **characterized in that** the intermediate energization (30) is decreased in a stepped fashion and has at least two average current strengths which differ from one another.

4. Method according to Claim 1, **characterized in that** the switching valve (2) is a 2/2-way valve which is currentless in the first switched position, and the fluid system is an electrohydraulic valve controller (1) for variable-stroke charge cycle valve activation of an internal combustion engine (5), wherein the valve controller (1) has at least the following features:
- a cam (6) which has at least one elevated portion (31, 34), of a camshaft (7), and a master piston (9) which is activated by the cam (6);
- a slave piston (10) which applies a stroke to at least one charge cycle valve (4);
- a high-pressure chamber (11) which runs between the master piston (9) and the slave piston (10), and a low-pressure chamber (12), wherein the switching valve (2) is arranged between the high-pressure chamber (11) and the low-pressure chamber (12).

5. Method according to Claim 4, **characterized in that** the operating states are operating states which are dependent on the rotational speed of the internal combustion engine (5).

6. Method according to Claim 4, **characterized in that** in a first operating state of the valve controller (1) a multiple stroke which comprises individual strokes (32, 33) which are generated within the same elevated portion (31) is applied to the charge cycle valve (4) within the same revolution of the cam (6).

7. Method according to Claim 6, **characterized in that** the charge cycle valve (4) is an inlet valve.

8. Method according to Claim 4, **characterized in that** the cam (6) has a plurality of elevated portions (31, 34), wherein in a second operating state of the valve controller (1) a multiple stroke which comprises individual strokes (35, 36) which are generated within the elevated portions (31, 34) is applied to the charge cycle valve (4) within the same revolution of the cam (6).

9. Method according to Claim 8, **characterized in that** the charge cycle valve (4) is an outlet valve.

10. Method according to Claim 8, **characterized in that** the charge cycle valve (4) is an inlet valve.

## Revendications

1. Procédé de commande d'une soupape de commutation électromagnétique (2) qui fait partie d'un système fluidique présentant différents états de fonctionnement et qui présente une bobine magnétique (17) ainsi qu'un groupe d'induit (19) pouvant être déplacé entre une première position de commutation libérant un écoulement fluidique et une deuxième position de commutation bloquant l'écoulement fluidique, avec un corps de fermeture de soupape (22) et un induit magnétique (20) qui est en liaison par force, exempte de force de traction, avec le corps de fermeture de soupape (22), **caractérisé en ce que** dans au moins un état de fonctionnement du système fluidique entre deux alimentations de bobine déplaçant le groupe d'induit (19), une alimentation intermédiaire (30) est effectuée pour amortir une suroscillation de l'induit magnétique (20).

2. Procédé selon la revendication 1, **caractérisé en ce que** la suroscillation de l'induit magnétique (20) a lieu pendant un premier intervalle de temps (Δt_{S}) et l'alimentation intermédiaire (30) est effectuée pendant un deuxième intervalle de temps (Δt_{I}), le premier intervalle de temps (Δt_{S}) étant complètement situé à l'intérieur du deuxième intervalle de temps (Δt_{I}).

3. Procédé selon la revendication 1, **caractérisé en ce que** l'alimentation intermédiaire (30) est régulée de manière étagée et présente au moins deux intensités de courant moyennes différentes l'une de l'autre.

4. Procédé selon la revendication 1, **caractérisé en ce que** la soupape de commutation (2) est une soupape à 2/2 voies sans courant dans la première position de commutation et le système fluidique est une commande de soupape électrohydraulique (1) pour l'actionnement à course variable des soupapes d'échange de gaz d'un moteur à combustion interne (5), la commande de soupape (1) présentant au moins les caractéristiques suivantes :
- une came (6) d'un arbre à cames (7) présentant au moins un rehaussement (31, 34) et un maître-piston (9) actionné par la came (6) ;
- un piston récepteur (10) soumettant au moins une soupape d'échange de gaz (4) à une course ;
- une chambre haute pression (11) s'étendant entre le maître-piston (9) et le piston récepteur (10) ainsi qu'une chambre basse pression (12), la soupape de commutation (2) étant disposée entre la chambre haute pression (11) et la chambre basse pression (12).

5. Procédé selon la revendication 4, **caractérisé en ce qu**'il s'agit d'états de fonctionnement dépendant du régime du moteur à combustion interne (5).

6. Procédé selon la revendication 4, **caractérisé en ce que** la soupape d'échange de gaz (4) est sollicitée dans un premier état de fonctionnement de la commande de soupape (1) avec une course multiple comprenant des courses individuelles (32, 33) produites à l'intérieur du même rehaussement (31), au cours de la même rotation de la came (6).

7. Procédé selon la revendication 6, **caractérisé en ce que** la soupape d'échange de gaz (4) est une soupape d'admission.

8. Procédé selon la revendication 4, **caractérisé en ce que** la came (6) présente plusieurs rehaussements (31, 34), la soupape d'échange de gaz (4) étant sollicitée dans un deuxième état de fonctionnement de la commande de soupape (1) avec une course multiple comprenant des courses individuelles (35, 36) produites à l'intérieur des rehaussements (31, 34), au cours de la même rotation de la came (6).

9. Procédé selon la revendication 8, **caractérisé en ce que** la soupape d'échange de gaz (4) est une soupape d'échappement.

10. Procédé selon la revendication 8, **caractérisé en ce que** la soupape d'échange de gaz (4) est une soupape d'admission.
